# EUROPEAN PATENT SPECIFICATION

(11) **EP 4 517 481 B1**
(45) Date of publication and mention of the grant of the patent: **21.10.2026**
(21) Application number: 23811076.1
(22) Date of filing: 24.05.2023
(51) Int. Cl.: G06F 1/20, G06F 1/26, G06F 1/28, G06F 1/30, G06F 1/3296

(54) **POWER SUPPLY METHOD FOR COMPUTER SYSTEM, AND RELATED APPARATUS AND DEVICE**
STROMVERSORGUNGSVERFAHREN FÜR EIN COMPUTERSYSTEM SOWIE ZUGEHÖRIGE VORRICHTUNG UND EINRICHTUNG
PROCÉDÉ D'ALIMENTATION ÉLECTRIQUE POUR SYSTÈME INFORMATIQUE, ET APPAREIL ET DISPOSITIF ASSOCIÉS

(30) Priority: 24.05.2022 CN 202210570589; 11.07.2022 CN 202210809012
(43) Date of publication of application: 05.03.2025
(73) Proprietor: Huawei Technologies Co., Ltd., Shenzhen, Guangdong 518129 (CN)
(72) Inventor: GAO, Junen, Shenzhen, Guangdong 518129 (CN); CAO, Jun, Shenzhen, Guangdong 518129 (CN)
(74) Representative: Thun, Clemens
(86) International application number: PCT/CN2023/095926
(87) International publication number: WO 2023/227005

(56) References cited:
- WO-A1-2021/120700
- CN-A- 107 128 187
- CN-A- 110 001 975
- US-A1- 2012 229 104
- US-A1- 2013 046 967
- US-A1- 2014 094 985
- US-A1- 2014 281 618
- US-A1- 2016 179 164
- US-A1- 2017 147 054
- US-A1- 2021 216 427
- US-A1- 2022 326 759

## Description

### TECHNICAL FIELD

This application relates to the computer field, and in particular, to a computer system power supply method, a power supply apparatus, a power management engine, a power system, and a computer system.

### BACKGROUND

A power supply unit in a computer system is configured to supply power to components such as an integrated circuit, a processor, and a memory in the system, to support normal work of the computer system. Usually, the components (for example, the processor) in the computer system support overclocking, to be specific, the processor works at a higher working frequency (for example, a power that exceeds a rated power), to improve processing performance. To meet an overclocking function of the components, the power supply unit is required to provide more power for the components.

Currently, a power supply unit with a high rated power may be configured in the computer system, and supplies power to the components (for example, the processor) in the system at the high rated power. However, component overclocking is a function that is enabled to meet a specific service requirement or performance requirement, is occasional, and is not a continuous state of the components. If the power supply unit continuously supplies power to the components at the high rated power, resource waste and high costs of the power supply unit are caused. Therefore, how to improve resource utilization of the power supply unit becomes an urgent problem to be resolved.

The document US 2013/046967 A1 shows a proactive power management system and method using a power management unit.

The document US 2017/0147054 A1 shows enhancing power-performance efficiency in a computer system when bursts of activity occur when operating in low power.

### SUMMARY

The present invention is defined by the independent claims. Further advantageous developments are shown by the dependent claims.

This application provides a computer system power supply method, a power supply apparatus, a power management engine, a power system, and a computer system, to resolve a problem of how to improve resource utilization of a power supply unit.

According to a first aspect, a computer system power supply method is provided. A power management module in a computer system obtains a parameter that affects a power supply capability, determines, based on the parameter, the power supply capability of a power supply unit to provide a burst power for a component in the computer system, and controls the power supply unit to supply power to the component in the computer system based on the power supply capability.

The power management module determines the power supply capability of the power supply unit based on the real-time dynamic parameter that affects the power supply capability, and controls the power supply unit to provide electric energy of the burst power for the component in the computer system based on the power supply capability of the power supply unit. Therefore, refined management of the power supply capability of the power supply unit is implemented, the power supply capability of the power supply unit is fully utilized to supply power, and on the premise of ensuring processing performance of the computer system, resource utilization of the power supply unit is improved, and costs of the power supply unit are reduced.

The burst power indicates an instantaneous power that meets a power supply requirement of the component in the computer system. For the power supply unit, the burst power can meet the power supply requirement of the component in an overclocking scenario, support computing processing of the component, and improve a data processing capability of the entire computer system.

The determining the power supply capability of a power supply unit based on the parameter includes: determining a remaining supply power of the power supply unit based on a rated power, an output voltage, an output current, and a temperature, and determining the burst power of the power supply unit and power supply duration of the burst power based on the remaining supply power and the obtained power supply requirement of the component. The power supply requirement indicates a power required by the component in a burst power supply scenario such as the overclocking. In this way, the remaining supply power and the power supply requirement of the power supply unit are used to allocate resources of the power supply unit in real time, and supply power to the component, to improve resource utilization of the power supply unit on the premise of ensuring processing performance of the computer system. In addition, because a quantity of power supply units does not need to be increased, and a manner of providing the burst power for the component by identifying the power supply capability of the original power supply unit is used, costs of a power supply unit that needs to be added are saved.

In a possible implementation, the parameter includes a rated power, an output voltage, an output current, and a temperature, and the determining the power supply capability of a power supply unit based on the parameter includes: supplying power to an overclocked component according to a preset rule, where the preset rule indicates a manner of alternately supplying power to the component at the rated power and the burst power. In this way, the burst power (for example, a power required for overclocking) is used as a standard specification, and the power supply capability of the power supply unit is preset, so that refined management on the power supply unit is implemented and the power supply requirement is better matched. In addition, there is no need to configure too many power supply units, so that costs of the power supply unit can be saved.

In another possible implementation, the controlling, based on the power supply capability, the power supply unit to supply power to the component in the computer system includes: controlling the power supply unit to adjust a bus voltage based on the power supply requirement to store electric energy, and supplying power to the component based on the burst power when the component is overclocked. This prevents a large voltage fluctuation of an alternating current caused by a burst power supply requirement when the component is overclocked, and better supports a burst power requirement of the component.

In another possible implementation, the controlling, based on the power supply capability, the power supply unit to supply power to the component in the computer system further includes: controlling to adjust a fan speed of the power supply unit, and supplying power to the component based on the burst power when the component is overclocked. This ensures better heat dissipation of the power supply unit and prevents faults caused by a high temperature of the power supply unit.

In another possible implementation, the controlling, based on the power supply capability, the power supply unit to supply power to the component in the computer system further includes: controlling to adjust a loop bandwidth of the power supply unit based on a proportional integral derivative (proportional integral derivative, PID) algorithm, and supplying power to the component based on the burst power when the component is overclocked. On the premise that a switch power ensures loop stability, a wider loop bandwidth indicates a faster impact of the output voltage and a stronger capability of adapting to overclocking.

In another possible implementation, before the controlling, based on the power supply capability, the power supply unit to supply power to the component in the computer system, the power supply capability is sent to the component, to enable the component to determine an overclocking manner based on the power supply capability, so that a power required when the component is overclocked meets a remaining supply power of the power supply unit, and accuracy of component overclocking is improved.

In another possible implementation, an interface between the power supply unit and the component is configured to: transmit the power supply requirement, and provide the power supply capability for the component. The power supply unit may directly obtain the power supply requirement of the component, and further provide the burst power for the component, so that the power supply requirement of the component is met and a resource of the power supply unit is fully utilized. In addition, the power supply unit may alternatively transmit the power supply capability of the power supply unit to the component, so that the component may implement overclocking based on the power supply capability of the power supply unit, and power utilization of the entire system is further improved.

In another possible implementation, the computer system may be a rack server, a chassis-level server (which may also be referred to as a high-density server or a blade server), or a cabinet-level server (which may also be referred to as a cabinet server). The power supply capability indicates a power supply capability of providing burst powers based on power supply requirements of a plurality of components in the computer system. In this way, centralized management is performed on the power supply capability of the power supply unit and the component overclocking, to obtain maximum overclocking performance.

In another possible implementation, the method further includes: after the power supply capability of the power supply unit is determined, adjusting the power supply capability based on the parameter that affects the power supply capability and load of the power supply unit, to fully utilize the power supply capability of the power supply.

According to a second aspect, a power supply apparatus is provided. The apparatus includes modules configured to perform the computer system power supply method in any one of the first aspect or the possible designs of the first aspect.

According to a third aspect, a computer system is provided. The computer system includes a power management module and a component, and the power management module is configured to perform operation steps of the method in any one of the first aspect or the possible designs of the first aspect, to supply power to the component.

In this application, on a basis of the implementations of the foregoing aspects, the implementations may be further combined to provide more implementations.

### BRIEF DESCRIPTION OF DRAWINGS

FIG. 1 is a schematic diagram of a computer system according to an embodiment of this application;
FIG. 2 is a schematic flowchart of a computer system power supply method according to an embodiment of this application;
FIG. 3 is a schematic flowchart of a personal computer power supply method according to an embodiment of this application;
FIG. 4 is a schematic diagram of energy storage at a bus voltage according to an embodiment of this application;
FIG. 5 is a schematic flowchart of another computer system power supply method according to an embodiment of this application;
FIG. 6 is a schematic flowchart of a rack server power supply method according to an embodiment of this application;
FIG. 7 is a schematic flowchart of a chassis-level server power supply method or a cabinet-level server power supply method according to an embodiment of this application;
FIG. 8 is a schematic flowchart of another computer system power supply method according to an embodiment of this application;
FIG. 9 is a schematic diagram of power supply at a rated power and a burst power according to an embodiment of this application; and
FIG. 10 is a schematic diagram of a structure of a power supply apparatus according to an embodiment of this application.

### DESCRIPTION OF EMBODIMENTS

For ease of understanding, the following first describes related terms used in embodiments of this application.

Overclocking (overclocking) is a technology for increasing a dominant frequency (namely, a clock pulse frequency) of a component, and further increasing a working frequency of the component. For example, a working frequency (for example, a dominant frequency, an external frequency, and a frequency multiplication) of a processor in a computer system is increased. The processor includes high-power computing units with a computing capability, such as a central processing unit (central processing unit, CPU), a graphics processing unit (graphics processing unit, GPU), a data processing unit (data processing unit, DPU), a neural processing unit (neural processing unit, NPU), and an embedded neural-network processing unit (neural-network processing unit, NPU).

A power supply unit (Power Supply Unit, PSU) is configured to provide electric energy for each component in the computer system. When the component is adjusted to be overclocked, the component needs to consume a higher power, and the power supply unit needs to provide a larger power supply capability.

A power indicates work done by an object in unit time, in other words, the power represents a physical quantity of a work speed of the object. A unit of the power is watt (watt, W), W for short. The power may be represented by P. P=W/t. W represents work, and a unit of the work is joule. t represents unit time, and a unit of t is second (second, S).

A rated power of the power supply unit indicates a power of the power supply unit under stable and continuous work, and represents a power supply capability of the power supply unit under stable and continuous work. The rated power of the power supply unit is a rated voltage of the power supply unit multiplied by a rated current. That is, P=W/t=UI, where U represents the rated voltage and I indicates the rated current.

An output power of the power supply unit indicates a power provided by the power supply unit when the power supply unit supplies power to load. The output power of the power supply unit is an output voltage of the power supply unit multiplied by an output current. If the output power is greater than the rated power, the power supply unit enables an over power protection (over power protection, OPP) function, and further powers off. If the over power protection is not enabled, the power supply unit may be damaged due to overheat. Over power protection is a mechanism in which when the output power of the power supply unit keeps increasing and reaches a threshold, the power supply unit automatically powers off to prevent the power supply unit from being damaged by overcurrent.

A burst power of the power supply unit indicates an instantaneous power provided by the power supply unit based on a power supply requirement (for example, overclocking) of the component.

This application provides a computer system power supply method, which may also be referred to as a power supply enhancement (Power Turbo) method. A power management module in a computer system obtains a parameter that affects a power supply capability, determines, based on the parameter, the power supply capability of a power supply unit to provide a burst power for a component in the computer system, and controls the power supply unit to supply power to the component in the computer system based on the power supply capability. The power management module determines the power supply capability of the power supply unit based on the real-time dynamic parameter that affects the power supply capability, and controls the power supply unit to provide electric energy of the burst power for the component in the computer system based on the power supply capability of the power supply unit. Therefore, refined management of the power supply capability of the power supply unit is implemented, the power supply capability of the power supply unit is fully utilized to supply power, and on the premise of ensuring processing performance of the computer system, resource utilization of the power supply unit is improved, and costs of the power supply unit are reduced.

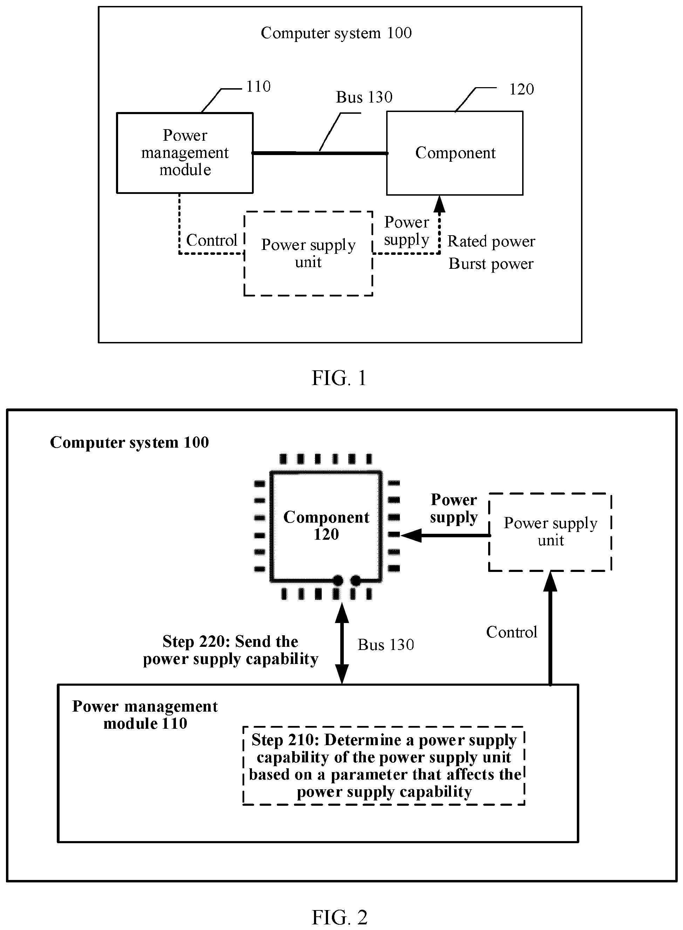

The following describes in detail the computer system power supply method provided in this application with reference to the accompanying drawings. FIG. 1 is a schematic diagram of a computer system 100 according to an embodiment of this application. As shown in FIG. 1, the computer system 100 includes a power management module 110 and a component 120. The power management module 110 is connected to the component 120 by using a bus 130.

The component 120 includes an electronic component used for data processing or communication in the computer system, such as a processor, a memory, a memory unit (which may also be referred to as a main memory (main memory) unit), a network adapter (for example, a network interface card (network interface card, NIC) or an intelligent network interface card (intelligent network interface card, iNIC)). The processor may be an XPU used for data processing, such as a CPU, a GPU, a DPU, or an NPU. For ease of description, the following embodiment is described by using an example in which the component 120 is a CPU.

The power management module 110 is configured to control a power supply unit to supply power to the component. The power supply unit may be disposed in the computer system 100, or may be disposed outside the computer system 100, and the power management module controls power supply of the power supply unit to the component 120.

The power supply unit is configured to: supply power to the component 120 in the computer system 100 at a rated power, and supply power to the component 120 in the computer system 100 at a burst power when the component 120 is adjusted to be overclocked. In other words, the power supply unit has a capability of outputting electric energy at the rated power for long time, and also has a capability of outputting the electric energy at a plurality of burst powers for short time. For example, the power supply unit has a capability of supplying power for long time at a rated power of 3 kilowatts (kilowatts, kW); the power supply unit further has a power supply capability of a burst power of 4.5 kW and power supply duration of 5 milliseconds (milliseconds, ms); and the power supply unit further has a power supply capability of a burst power of 3.6 kW and power supply duration of 100 ms.

It should be noted that the computer system 100 in FIG. 1 may include one or more components, and types of the plurality of components may be the same or different. For example, the computer system 100 may include a CPU and a GPU. The processor may be a multi-core (multi-CPU) processor.

The bus 130 may include a path, configured to transmit information, for example, a power supply requirement fed back by the component 120 to the power management module 110, and a power supply capability fed back by the power supply unit to the component 120 under control of the power management module 110, between the foregoing components (for example, the power management module 110 and the component 120). In addition to a data bus, the bus 130 may further include a power bus, a control bus, a status signal bus, and the like. However, for clear description, various buses are marked as the bus 130 in the figure. The bus 130 may be a peripheral component interconnect express (Peripheral Component Interconnect Express, PCIe) bus, an extended industry standard architecture (extended industry standard architecture, EISA) bus, a unified bus (unified bus, Ubus or UB), a compute express link (compute express link, CXL), cache uniform interconnect for accelerators (cache coherent interconnect for accelerators, CCIX), or the like.

In FIG. 1, an example in which the computer system 100 only includes one power management module 110 and one component 120 is used. Herein, the power management module 110 and the component 120 separately indicate a type of component or device. In a specific embodiment, a quantity of components or devices of each type may be determined based on a service requirement.

The following describes a computer system power supply method according to an embodiment of this application with reference to FIG. 2, and the method is shown in the figure.

**Step 210: A power management module 110 determines a power supply capability of a power supply unit based on a parameter that affects the power supply capability.**

The power management module 110 may obtain a rated power, an output current, an output voltage, and a temperature that are reported by the power supply unit. The rated power may be preconfigured, and the power management module 110 may obtain the rated power from configuration information, for example, may obtain the rated power by reading a configuration file of the power supply unit. The power management module 110 may monitor a power supply change of the power supply unit to obtain the output current, the output voltage, and the temperature. The temperature may be an ambient temperature of the power supply unit. A higher ambient temperature indicates a lower output power of the power supply unit, and a lower ambient temperature indicates a higher output power of the power supply unit. In this way, the power management module 110 determines a total supply power based on the rated power and the temperature, determines a total output power based on the output current and the output voltage, and further determines, based on a difference between the total supply power and the total output power, a remaining supply power, namely, an available power supply capability of the power supply unit.

In addition, the computer system 100 may include one or more power supply units. When the computer system 100 includes one power supply unit, the total supply power is a total supply power of the power supply unit, and the total output power is a total output power of the power supply unit.

When the computer system 100 includes a plurality of power supply units, the total supply power is a total supply power of the plurality of power supply units, and the total output power is a total output power of the plurality of power supply units. The total supply power is shown in formula (1). The total output power is shown in formula (2). $P ′ = Pi ∗ n ∗ w$ Formula (1)

*P'* represents the total supply power, i represents the i^{th} power supply unit, Pi represents a rated power of the i^{th} power supply unit, n represents a quantity of power supply units, and w represents the temperature. $P " = {\sum }_{k = 1}^{i} {U}_{k} {I}_{k}$ Formula (2)

*P"* represents the total output power.

The remaining supply power is shown in formula (3). $P ‴ = P ′ - P "$ Formula (3)

*P‴* represents the remaining supply power.

In some other embodiments, the power management module 110 may obtain a total supply power and a total output power that are reported by each power supply unit, and determine the remaining supply power based on a difference between a sum of total supply powers of the power supply units and a sum of total output powers of the power supply units. The total power supply and the total output power of each power supply unit are determined by the power supply unit.

The power supply unit may report the foregoing information through a communication interface, for example, an interface that can implement communication between components, such as a CAN-bus interface or a PMbus interface, between the power supply unit and the power management module 110.

Further, the power management module 110 may obtain a power supply requirement reported by the component 120, and determine, based on the remaining supply power and the power supply requirement, the power supply capability of the power supply unit, that is, a burst power of the power supply unit and power supply duration of the burst power. The power supply requirement indicates a power required by the component 120 for burst power supply. For example, the power supply requirement indicates a power that needs to be consumed by the component 120 when the component 120 is adjusted to be overclocked. If the power management module 110 determines that the remaining supply power meets the burst power, the power management module 110 performs step 220. If the power management module 110 determines that the remaining supply power does not meet the burst power, the power management module 110 supplies power to the component 120 at the rated power.

**Step 220: The power management module 110 sends the power supply capability to the component 120.**

The power management module 110 may control, based on the power supply requirement of the component 120, the power supply unit to supply power to the component 120 at the burst power, so that the component 120 can work normally in an overclocking scenario.

In this way, the power supply unit provided in this embodiment of this application has a capability of outputting electric energy at the rated power for long time, and also has a capability of outputting the electric energy at a plurality of burst powers for short time. After the power management module obtains the power supply requirement of the component, the power management module determines the remaining supply power of the power supply unit based on the rated power, the output current, the output voltage, and the temperature of the power supply unit, and controls, based on the power supply requirement, the power supply unit to provide electric energy of the burst power for the component in the computer system based on the remaining supply power of the power supply unit, to implement refined management of the power supply capability of the power supply unit, fully utilize the power supply capability of the power supply unit, and on the premise of ensuring processing performance of the computer system, improve resource utilization of the power supply unit and reduce costs of the power supply unit.

The foregoing computer system power supply method may be applied to a scenario in which a personal computer (Personal Computer, PC) or a rack server is configured with a high-power component (for example, a CPU, a GPU, an NPU, or a DPU), and may also be applied to a scenario in which a chassis-level server, a cabinet-level server, or a cluster configured with a plurality of server nodes is configured with a high-power component in the server.

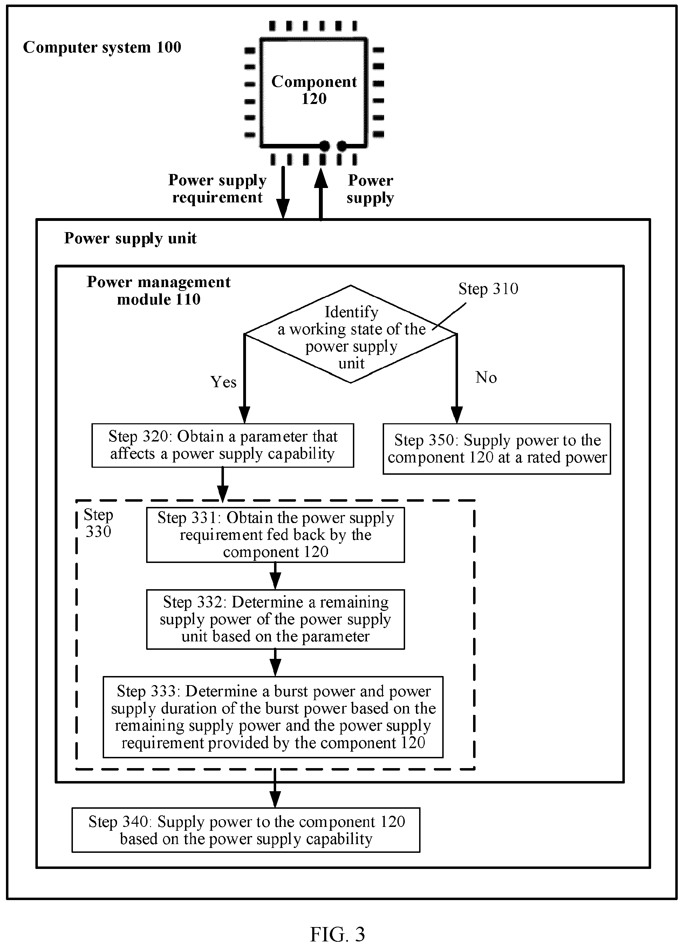

The power management module 110 may be a part of the power supply unit, or may be implemented by a power management engine outside the power supply unit. For ease of understanding, the following further describes the method provided in this application with reference to FIG. 3 to FIG. 7.

FIG. 3 is a schematic diagram of a personal computer power supply according to an embodiment of this application. It is assumed that a computer system 110 is a personal computer, and a power supply unit in the computer system 110 supplies power to an overclocked component 120. The foregoing power management module 110 may be a logic circuit in the power supply unit. For example, the power management module 110 may be a power monitor unit (power monitor unit, PMU) in the power supply unit.

**Step 310: The power management module 110 identifies a working state of the power supply unit.**

The power supply unit may be configured to be in different working states, where the working states include a dynamic power supply mode and a non-dynamic power supply mode. The power management module 110 may determine the working state of the power supply unit by reading a system configuration item or an interface parameter in the system. For example, the power management module 110 may determine content of a power configuration item through a basic input/output system (basic input output system, BIOS), and further determine the working state of the power supply unit.

When the power management module 110 determines that the working state of the power supply unit is the dynamic power supply mode, **step 320 to step 340 are performed, and the** power **supply unit supplies** power **to the component 120 based on a** power **supply requirement and based on a power supply capability of a burst power.**

When the power management module 110 determines that the working state of the power supply unit is the non-dynamic power supply mode, **step 350 is performed, and the power supply unit supplies power to the component 120 at a rated power.**

It should be noted that the power supply unit of the personal computer may support two working states, to be specific, the dynamic power supply mode and the non-dynamic power supply mode, and the power management module may control, based on the current working state, the power supply unit to supply power to the component. Optionally, the dynamic power supply mode may be a default configuration of the power supply unit, to be specific, the personal computer supports the dynamic power supply mode by default. In this case, the power management module may supply power to the component according to the method in this application, and the power management module does not need to perform step 310.

**Step 320: The power management module 110 obtains a parameter that affects a power supply capability.**

The power management module 110 obtains the parameter that affects the power supply capability, where the parameter includes the rated power, a temperature, an output current, and an output voltage of the power supply unit, so that the power management module 110 determines a total supply power based on the temperature and the rated power, and determines a total output power based on the output current and the output voltage. For a specific explanation, refer to descriptions of step 210. For example, the parameter that affects the power supply capability include a rated power, a temperature, an output current, and an output voltage of the component in the power supply unit. The component in the power supply unit includes an electromagnetic filter (electromagnetic interference, EMI), a power protector, a rectifier filter circuit, a switch-mode transformer, a field effect transistor (MOSFET), and the like.

**Step 330: The power management module 110 determines the power supply capability of the power supply unit based on the parameter.**

The power supply capability indicates a capability of the power supply unit to provide the burst power for the component 120 in the computer system 100. The power supply capability meets a burst power required when the component 120 works in an overclocking manner.

In a possible manner, the power management module 110 negotiates with the component 120 to control the power supply unit to supply power to the overclocked component 120. In other words, after the power management module 110 obtains the power supply requirement of the component 120, the power management module 110 determines the power supply capability of the power supply unit based on the power supply requirement and the parameter. A negotiation process between the power management module 110 and the component 120 includes: The power supply unit supplies power to the component based on the power supply requirement of the component.

For example, as shown in FIG. 3, a specific operation process included in step 330 is described in the following step 331 to step 333.

**Step 331: The power management module 110 obtains the power supply requirement fed back by the component 120.**

There is a communicable interface between the component 120 and the power supply unit, so that information synchronization can be implemented between the component 120 and the power supply unit. The communicable interface includes an interface such as an inter-integrated circuit (Inter-Integrated Circuit, I2C) interface, an improved inter-integrated circuit (Improved Inter-Integrated Circuit, I3C) interface, or the like that can implement communication connection between the component 120 and the power supply unit. The power supply unit obtains the power supply requirement through the interface connected to the component 120, to flexibly and dynamically supply power to the component 120.

**Step 332: The power management module 110 determines a remaining supply power of the power supply unit based on the parameter.**

The remaining supply power may be an available power supply capability that can be provided by the power supply unit for the component 120. For explanations of the remaining supply power, refer to the descriptions of step 210.

**Step 333: The power management module 110 determines the burst power and power supply duration of the burst power based on the remaining supply power and the power supply requirement provided by the component 120.**

The power management module 110 determines the burst power and the power supply duration of the burst power based on the remaining supply power and a power indicated by the power supply requirement. For example, the power management module 110 determines a difference between the remaining supply power and the power indicated by the power supply requirement, and compares the difference with a threshold range to determine the power supply duration. A correspondence between the threshold range and the power supply duration may be preset based on a service requirement. A larger threshold range indicates a longer power supply duration. On the contrary, a smaller threshold range indicates a shorter power supply duration. For example, a first threshold range is larger than a second threshold range, and first duration is longer than second duration. If the difference is within the first threshold range, it is determined that the power supply duration of the burst power is the first duration corresponding to the first threshold range; or if the difference is within the second threshold range, it is determined that the power supply duration of the burst power is the second duration corresponding to the second threshold range. For example, the remaining supply power is 300 W, the burst power is 100 W, and the power supply duration is long time; the remaining supply power is 500 W, the burst power is 300 W, and the power supply duration is 100 milliseconds; the remaining supply power is 600 W, the burst power is 500 W, and the power supply duration is 10 milliseconds.

**Step 340: The power management module 110 controls the power supply unit to supply power to the component 120 based on the power supply capability.**

The power supply unit may store electric energy in advance based on the power supply requirement of the component 120. When the component 120 is overclocked, the power supply unit supplies power to the component 120 based on the burst power of the power supply unit, to avoid a large voltage fluctuation of an alternating current caused by a burst power supply requirement when the component 120 is overclocked, and better support a burst power requirement of the component 120.

Specifically, the power supply unit may supply power to the component in at least one of the following manners.

Manner 1: The electric energy of the power supply unit is stored by increasing a bus voltage.

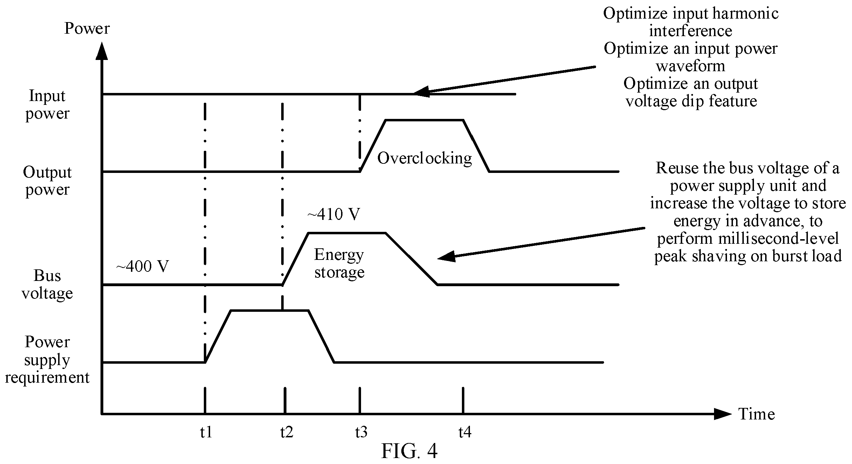

The bus voltage of the power supply unit may be a voltage at which the power supply unit converts the alternating current into a direct current. The power supply unit may increase the bus voltage to store the electric energy in advance, to support the burst power requirement of the component 120. As shown in FIG. 4, at a moment t1, the power supply unit receives the power supply requirement; at a moment t2, the power supply unit increases the bus voltage from 400 V to 410 V; at a moment t3, the component 120 is overclocked, and an output power of the power supply unit increases; at a moment t4, overclocking of the component 120 ends, and load of the power supply unit decreases. An input power of the power supply unit indicates a power of an alternating current input to the power supply unit in an equipment room.

Manner 2: Fast response of the power supply unit is implemented by using a loop bandwidth.

The power supply unit adjusts the loop bandwidth based on a PID algorithm. The PID algorithm indicates that a control value for adjusting the loop bandwidth is calculated based on a system error by using proportional, integral, and derivative. On the premise that a switch power ensures loop stability, a wider loop bandwidth indicates a faster impact of the output voltage and a stronger capability of adapting to overclocking.

Manner 3: Temperature control of the power supply unit is implemented by controlling a fan speed.

A fan is usually disposed in the power supply unit, and may be configured to dissipate heat for the component in the power supply unit. Further, the fan in the power supply unit may be adjusted to cope with a problem of a temperature rise of the component in the power supply unit caused by the burst power when the component 120 is overclocked. For example, the fan speed may be increased so that heat dissipation of the power supply unit is better and the temperature of the component in the power supply unit is lower.

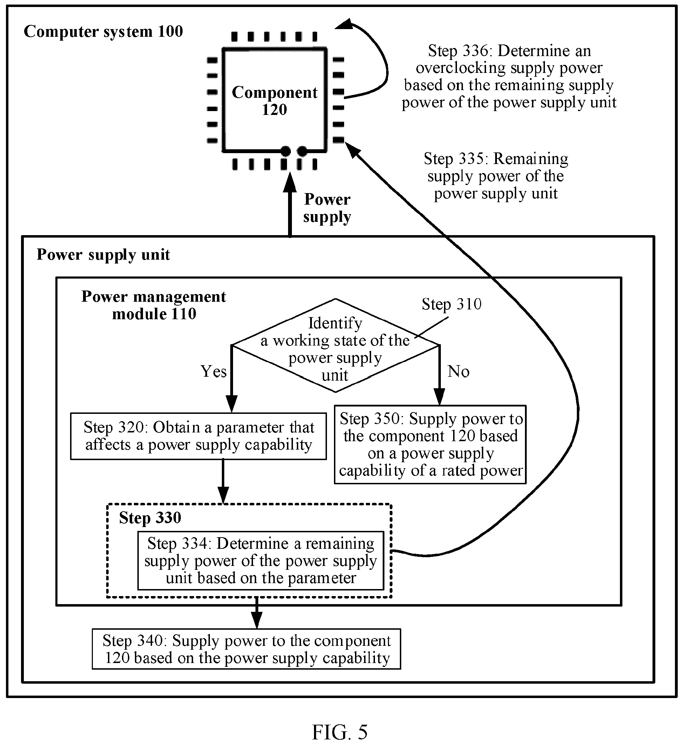

In a possible embodiment, in addition to that the power supply unit supplies power based on the power supply requirement of the component, the negotiation process between the power supply unit and the component 120 further includes: The component 120 may further determine an overclocking manner of the component 120 based on the power supply capability of the power supply unit. To be specific, the power supply unit feeds back the power supply capability to the component 120, and the component 120 determines an overclocking burst power. With reference to FIG. 5, the following describes in detail how the component 120 determines the overclocking burst power based on the power supply capability fed back by the power supply unit. As shown in FIG. 5, a specific operation process included in step 330 in FIG. 3 is described in the following step 334 to step 336.

**Step 334: The power management module 110 determines a remaining supply power of the power supply unit based on the parameter.**

**Step 335: The power management module 110 controls the power supply unit to feed back the remaining supply power of the power supply unit to the component 120.**

The power supply unit feeds back the remaining supply power of the power supply unit through an I2C interface or an I3C interface connected to the component 120, to flexibly and dynamically supply power to the component 120. The remaining supply power of the power supply unit may be synchronized periodically (for example, 1 ms) between the power supply unit and the component 120, and the component 120 implements overclocking based on the obtained power supply capability of the power supply unit.

**Step 336: The component 120 determines an overclocking supply power based on the remaining supply power of the power supply unit.**

The component 120 may determine, based on the remaining supply power, a power that can be provided by the power supply unit, and the component 120 controls a required burst power by controlling a working frequency. That is, the power that can be provided by the power supply unit should meet the burst power, to match the power supply capability of the burst power of the power supply unit. For example, different frequency modulation manners may be set for the component 120 based on a service requirement. For example, a level 1 corresponds to overclocking of 20% of a normal frequency, in other words, the component 120 works at a working frequency of 1.2 times the normal frequency, and the power supply unit supplies power at a burst power required at the working frequency of the overclocked component 120. A level 2 corresponds to overclocking of 50% of the normal frequency, in other words, the component 120 works at a working frequency 1.5 times the normal frequency, and the power supply unit supplies power at a burst power required by the overclocking working frequency of the component 120.

If the component 120 determines that the power that can be provided by the power supply unit does not meet the burst power, the component 120 may reduce the working frequency.

According to the computer system power supply method provided in this embodiment of this application, a communication interaction mechanism is established between the power supply unit and the component in the computer system, so that the power supply unit flexibly provides the electric energy for component overclocking in the system. In this way, on the premise of meeting the burst power of the component overclocking, resource utilization of the power supply unit is improved and costs of the power supply unit are reduced.

In the foregoing embodiment, the personal computer is used as an example to describe the computer system power supply method. The following describes scenarios in which the computer system power supply method is applied to a rack server, a chassis-level server, and a cabinet-level server with reference to the accompanying drawings.

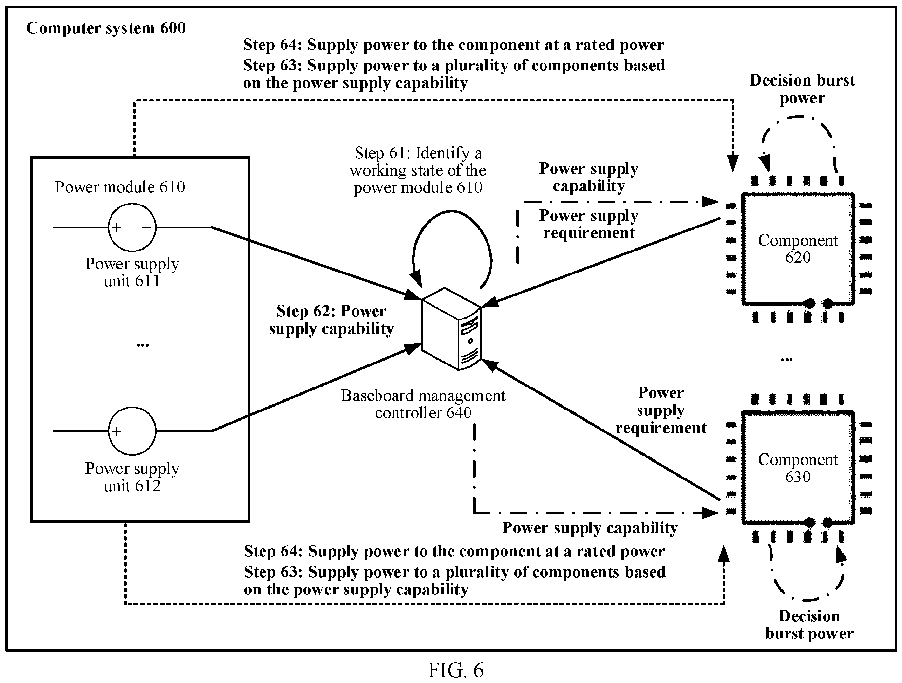

FIG. 6 is a schematic diagram of another computer system 600 according to an embodiment of this application. The computer system 600 may be a rack server. As shown in FIG. 6, the computer system 600 includes a power module 610, and the power module 610 includes a plurality of power supply units, such as a power supply unit 611 and a power supply unit 612 shown in FIG. 6. The power module 610 is configured to supply power to a plurality of components included in the computer system 600. The plurality of components include a component 620 and a component 630 shown in FIG. 6. For example, the components include at least one of a CPU, a GPU, and an NPU. The computer system 600 may further include a baseboard management controller (Baseboard Management Controller, BMC) 640. The baseboard management controller 640 is connected to the power module 610 and the plurality of components through an I2C interface or an I3C interface.

It should be noted that the foregoing power management module 110 may be the baseboard management controller 640 in the computer system 600. In other words, the baseboard management controller 640 is configured to implement functions of the power management module 110 in the foregoing embodiments. For example, the baseboard management controller 640 negotiates with the plurality of components to supply power to an overclocked component. A method includes the following steps.

**Step 61: The baseboard management controller 640 identifies a working state of the power module 610.**

The baseboard management controller 640 obtains working states of the plurality of power supply units included in the power module 610. For example, the baseboard management controller determines content of a configuration item of the power supply unit, and further determines a working state of the power management module. When the baseboard management controller 640 determines that the working state of the power supply unit is a dynamic power supply mode, **step 62 and step 63 are performed, and the power supply unit supplies power to the component based on a power supply requirement and based on a power supply capability of a burst power.**

When the baseboard management controller 640 determines that the working state of the power supply unit is a non-dynamic power supply mode, **step 64 is performed, and the power supply unit supplies power to the component at a rated power.**

**Step 62: The baseboard management controller 640 obtains a power supply capability of each power supply unit in the power module 610.**

The baseboard management controller 640 may obtain a total supply power and a total output power that are reported by each power supply unit, and determine a remaining supply power based on a difference between a sum of total supply powers of the power supply units and a sum of total output powers of the power supply units. The total power supply and the total output power of each power supply unit are determined by the power supply unit. Alternatively, the baseboard management controller 640 may obtain a parameter that affects the power supply capability and that is reported by the power supply unit, determine a total supply power and a total output power of each power supply unit based on the parameter that affects the power supply capability, and then determine a remaining supply power based on the total supply power and the total output power of each power supply unit. For explanations of the remaining supply power, refer to descriptions of step 210.

The baseboard management controller 640 counts remaining supply powers of the plurality of power supply units, and determines a power supply capability based on power supply requirements of the plurality of components, where the power supply capability indicates a capability of providing burst powers for the plurality of components.

In a possible embodiment, the baseboard management controller 640 may further feed back the power supply capability to the component, so that the component is overclocked based on the indicated burst power, and the power supply unit can support the component in overclocking.

**Step 63: The power module 610 supplies power to the plurality of components based on the power supply capability of the power module 610.**

The power supply capability of the power module 610 meets a power required by the power supply requirement, and the power module 610 supplies power to the plurality of components based on the power supply capability of the power module 610. The power supply capability of the power module 610 does not meet the power required by the power supply requirement, and the power module 610 supplies power to plurality of components based on the rated power of the power module 610. In this embodiment, the plurality of components in the rack server are power supply demanders.

In some embodiments, the baseboard management controller 640 may allocate power supply capacities to the plurality of components based on service priorities of services processed by the components 120 or priorities of the components 120. For example, the baseboard management controller 640 sets overclocking burst powers for the components based on power supply priorities of the components in descending order. In this case, the power supply unit provides the overclocking burst powers for the components based on the power supply priorities of the components in descending order. For example, a power required by the component 1 is 300 W, and the power supply unit provides electric energy of 300 W for the component 1 for long time. A power required by a component 2 is 500 W, and the power supply unit provides electric energy of 500 W for the component 2 for 100 ms. A power required by a component 3 is 600 W, and the power supply unit provides electric energy of 600 W for the component 3 for 10 ms.

It should be noted that the power module 610 may supply power in a current equalization power supply mode and an active/standby power supply mode.

For the current equalization power supply mode, the plurality of power supply units included in the power module 610 are of a same level, in other words, powers output by the power supply units are the same. Different power supply units may supply power to a same component or different components, so that different components obtain different electric energy.

For the active/standby power supply mode, the plurality of power supply units included in the power module 610 are of different levels, and the plurality of power supply units include an active power supply unit and a standby power supply unit. When the power module 610 supplies power to the component, the active power supply unit first supplies power to the component based on the determined power supply capability, and if a remaining supply power of the active power supply unit does not meet the burst power, the standby power supply unit supplies power to the component.

In some other embodiments, the baseboard management controller 640 actively sends the power supply capability of the power module 610 to the plurality of components, and the components determine, based on the power supply capability, whether to be overclocked. The plurality of power supply units included in the power module 610 supply power based on burst frequencies of the components. For a specific implementation, refer to descriptions of step 333 to step 336.

In this way, the baseboard management controller performs centralized management on the power supply capability of the power supply unit and component overclocking, to obtain maximum overclocking performance.

A chassis-level server and a cabinet-level server are integrated with a plurality of server nodes, and each server node is configured with a plurality of components. Power consumption of the chassis-level server and the cabinet-level server is high. To use electric energy provided by a power supply unit more efficiently and reduce costs of the power supply unit, a centralized power supply manner is usually used. For example, supply powers output by a plurality of power supply units are combined on a power supply bus to form a power supply resource pool that supplies power to components in the plurality of server nodes.

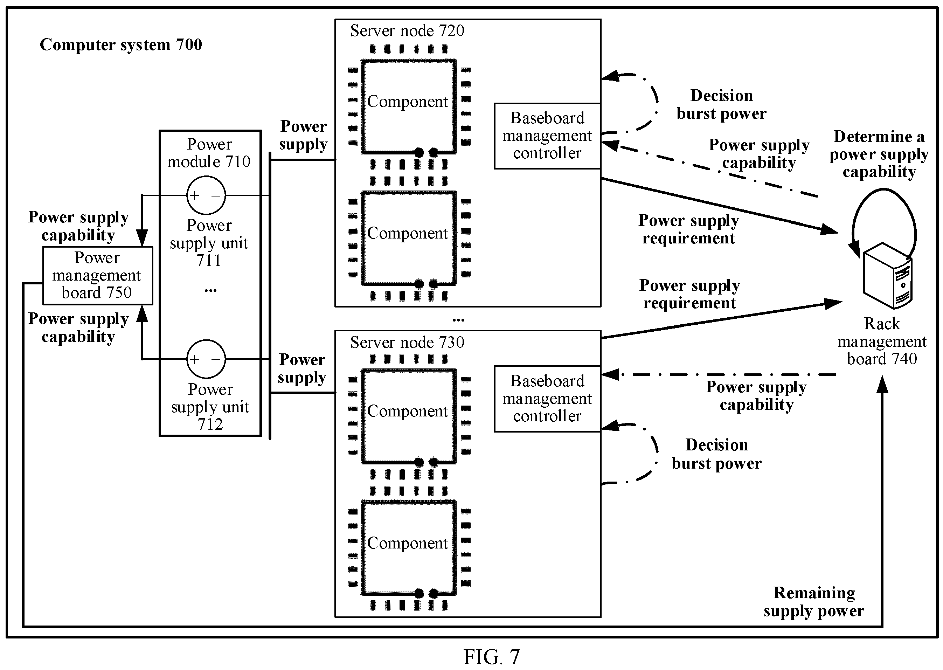

FIG. 7 is a schematic diagram of another computer system 700 according to an embodiment of this application. The computer system 600 may be a chassis-level server or a cabinet-level server. As shown in FIG. 7, the computer system 700 includes a power module 710, and the power module 710 includes a plurality of power supply units, such as a power supply unit 711 and a power supply unit 712 shown in FIG. 7. The power module 710 is configured to supply power to components of a plurality of server nodes included in the computer system 700. The plurality of server nodes include a server node 720 and a server node 730 shown in FIG. 7. The computer system 700 may further include a rack management board 740 and a power management board 750. The power management board 750 is connected to the power module 710, and is configured to manage the power module 710. The rack management board 740 is separately connected to the plurality of server nodes and the power management board 750, and is configured to manage the plurality of server nodes.

It should be noted that the foregoing power management module 110 may be the rack management board 740 and the power management board 750 in the computer system 700, in other words, the rack management board 740 and the power management board 750 are configured to implement functions of the power management module 110 in the foregoing embodiments.

The power management board 750 is configured to count a remaining supply power of the power module 710, and feed back the remaining supply power of the power module 710 to the rack management board 740. For a method for counting the remaining supply power of the power module 710, refer to descriptions of the baseboard management controller 640 in step 62 shown in FIG. 6.

The power management board 750 is further configured to identify a working state of the power module 710. Specifically, refer to descriptions of the baseboard management controller 640 in step 61 shown in FIG. 6.

The rack management board 740 is configured to determine a power supply capability based on the remaining supply power of the power module 710 and power supply requirements of the plurality of server nodes, and further feed back the power supply capability of the power module 710 to the components by using the baseboard management controller. The power supply capability indicates a capability of providing burst powers for the plurality of server nodes. In addition, the rack management board 740 actively sends the power supply capability of the power module 710 to the plurality of server nodes, so that the server nodes determine, based on the power supply capability, whether to be overclocked, and the power supply unit can support burst powers for overclocking of the components in the server nodes. Reference may be made to the descriptions of the baseboard management controller 640 in step 62 shown in FIG. 6. In this embodiment, the plurality of components in the chassis-level server or the cabinet-level server are power supply demanders.

In some embodiments, the rack management board 740 may allocate power supply capacities to the plurality of server nodes based on service priorities of services processed by the server nodes or priorities of the server nodes.

Optionally, the rack management board 740 and the power management board 750 may be combined into one management board.

In this way, the rack management board, the power management board, and the baseboard management controller collaborate to perform centralized management on the power supply capability of the power supply unit and processor overclocking, to obtain maximum overclocking performance.

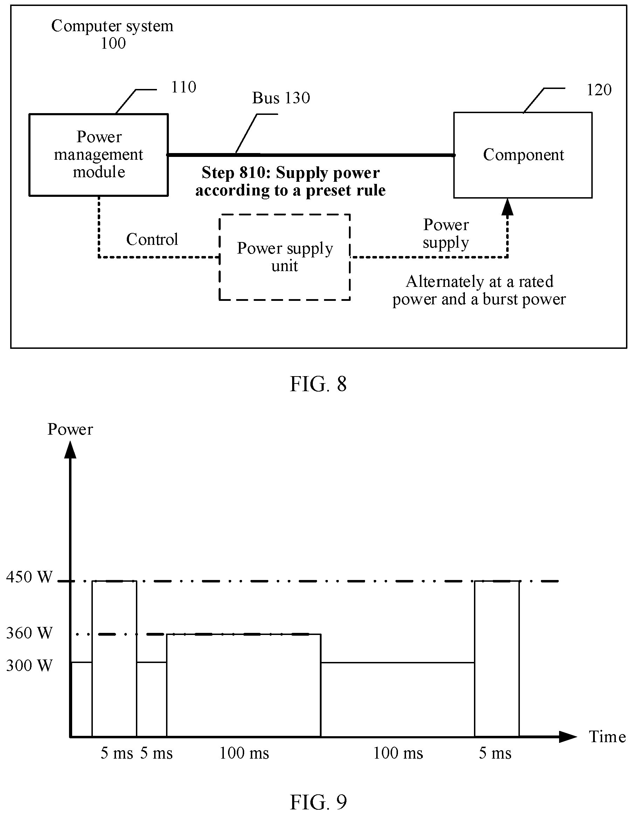

In a possible manner, a power management module does not negotiate with a component in a computer system, and supplies, according to a preset rule, power to an overclocked component. For example, FIG. 8 is a schematic flowchart of another computer system power supply method according to an embodiment of this application.

**Step 810: A power management module 110 controls, according to a preset rule, a power supply unit to supply power to a component 120.**

The preset rule indicates a manner of alternately supplying power to the component at a rated power and a burst power. Specifically, the preset rule indicates power supply duration of the rated power and power supply duration of the burst power when power is alternately supplied at the rated power and the burst power. A power supply interval and the power supply duration may be determined based on a power supply requirement of a working frequency of the component, and the power supply interval may be set based on a service requirement or a requirement of the component. Table 1 shows the power supply requirement of the working frequency of the component.

**Table 1**

| Electrical design power EDP | Duration |
|---|---|
| 2*thermal design power | ≤20 microseconds |
| 1.6*thermal design power | ≤2 milliseconds |
| 1.5*thermal design power | ≤5 milliseconds |
| 1.2*thermal design power | ≤10 milliseconds |
| 1.1*thermal design power | ≤20 milliseconds |

The thermal design power (Thermal Design Power, TDP) is an indicator that reflects heat release of the component. The electrical design power indicates total power consumption of component overclocking. The power supply unit may supply power to the component based on the electrical design power and the duration in Table 1.

The power supply unit has a power supply capability of a burst power and power supply duration for overclocking of the component 120, in other words, the power supply unit not only supports the rated power for long-time power supply, but also supports burst power specifications of different duration. For example, the power supply unit has a rated power of 3 kW, supports long-time continuous power supply at 3 kW; supports power supply at a burst power of 4.5 kW, where the power supply duration is 5 ms, a power supply interval at 4.5 kW is 5 ms, and power is supplied at the rated power of 3 kW within the power supply interval of 5 ms; and supports power supply at a burst power of 3.6 kW, where the power supply duration is 100 ms, a power supply interval at 3.6 kW is 100 ms, and power is supplied at the rated power of 3 kW within the power supply interval of 100 ms.

For example, as shown in FIG. 9, the rated power of the power supply unit is 300 W. If the component 120 is overclocked to 450 W, power supply duration of the power supply unit supplying power at 450 W is 5 ms, and power supply duration of the power supply unit supplying power at 300 W is 5 ms. If the component 120 is overclocked to 360 W, power supply duration of the power supply unit supplying power at 360 W is 100 ms, and power supply duration of the power supply unit supplying power at 300 W is 100 ms.

In this way, the burst power (for example, a power required for overclocking) is used as a standard specification, and a power supply capability of the power supply unit is preset, so that refined management on the power supply unit is implemented and a power supply requirement of the component is better matched. There is no need to configure too many power supply units, so that costs of the power supply unit can be saved.

It may be understood that, to implement functions in the foregoing embodiments, the computing system includes a corresponding hardware structure and/or software module for performing each function. A person skilled in the art should be easily aware that, with reference to the units and the method steps in the examples described in embodiments disclosed in this application, this application can be implemented by using hardware or a combination of hardware and computer software. Whether a function is performed by using hardware or hardware driven by computer software depends on particular application scenarios and design constraints of the technical solutions.

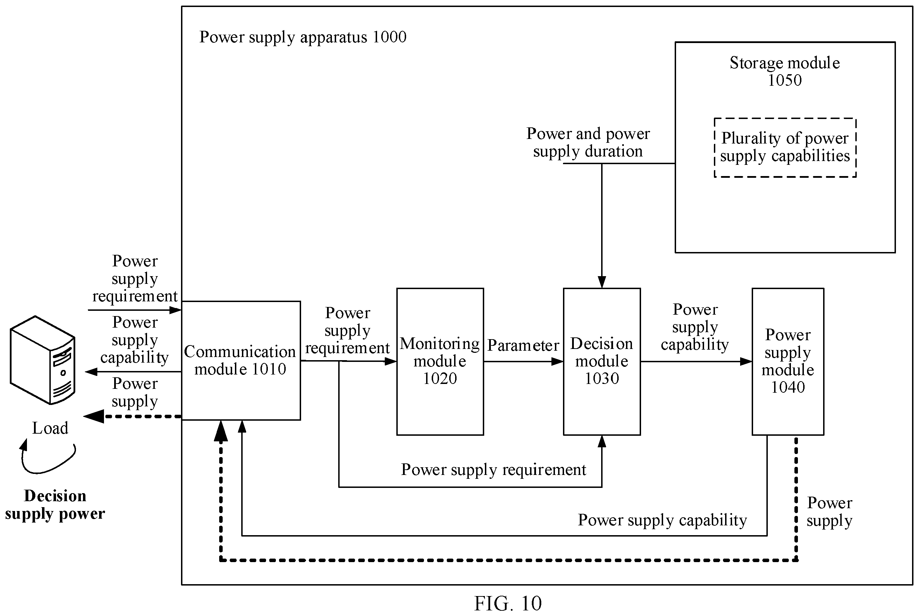

With reference to FIG. 1 to FIG. 9, the foregoing describes in detail the computer system power supply method according to this embodiment. With reference to FIG. 10, the following describes a power supply apparatus according to this embodiment.

FIG. 10 is a schematic diagram of a structure of a possible power supply apparatus according to an embodiment. These power supply apparatuses may be configured to implement functions of the power supply unit in the foregoing method embodiments, and therefore may also implement beneficial effects of the foregoing method embodiments. In this embodiment, the power supply apparatus may be the power management module 110 shown in FIG. 2, FIG. 3, FIG. 5, or FIG. 8, the baseboard management controller 640 shown in FIG. 6, or the rack management board 740 and the power management board 750 shown in FIG. 7.

As shown in FIG. 10, the power supply apparatus 1000 includes a monitoring module 1020, a decision module 1030, a power supply module 1040, and a storage module 1050. The power supply apparatus 1000 is configured to implement the functions of the power management module in the method embodiments shown in FIG. 2, FIG. 3, FIG. 5, FIG. 6, FIG. 7, and FIG. 8.

The monitoring module 1020 is configured to obtain a parameter that affects a power supply capability and that is of a power supply unit in a computer system. For example, the monitoring module 1020 is configured to perform step 210 in FIG. 2. For another example, the monitoring module 1020 is configured to perform step 320 in FIG. 3.

The decision module 1030 is configured to determine the power supply capability of the power supply unit based on the parameter, where the power supply capability indicates a capability of providing a burst power for a component in the computer system. For example, the decision module 1030 is configured to perform step 330 in FIG. 3.

The power supply module 1040 is configured to supply power to the component in the computer system based on the power supply capability. For example, the power supply module 1040 is configured to perform step 340 in FIG. 3.

Optionally, the power supply apparatus 1000 further includes a communication module 1010, configured to obtain a power supply requirement, and feed back the power supply capability of the power supply unit. For example, the communication module 1010 is configured to perform step 331 in FIG. 3 and step 335 in FIG. 5.

Optionally, the power supply apparatus 1000 further includes a storage module 1050, which may be configured to store information such as a plurality of power supply capacities corresponding to the foregoing method embodiments and formed by combinations of powers and power supply duration.

It should be understood that the power supply apparatus 1000 in this embodiment of this application may be implemented by using the power supply unit, a baseboard management controller, a power management board, or a rack management board. The power supply apparatus 1000 according to this embodiment of this application may correspondingly perform the method described in embodiments of this application. In addition, the foregoing and other operations and/or functions of the units of the power supply apparatus 1000 are respectively used to implement corresponding procedures of the method in FIG. 2, FIG. 3, FIG. 5, FIG. 6, FIG. 7, and FIG. 8. For brevity, details are not described herein again.

This application further provides a power management engine. The power management engine includes a processor and a power supply circuit, the power supply circuit is configured to supply power to the processor, and the processor is configured to implement functions of operation steps performed by the power management module in the method described in the foregoing embodiments.

This application further provides a power supply system. The power supply system includes a power management module and a power supply unit, and the power management module is configured to perform operation steps of the method in the foregoing embodiments, to control the power supply unit to supply power to a component.

This application further provides a power management module. The power management module includes a processor and a memory. The memory is configured to store a group of computer instructions. When the processor executes the group of computer instructions, operation steps of the method in the foregoing embodiments supply power to a component in a computer system.

The method steps in this embodiment may be implemented in a hardware manner, or may be implemented by executing software instructions by the processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in a computing device. Certainly, the processor and the storage medium may alternatively exist as discrete components in a network device or a terminal device.

A part or all of the foregoing embodiments may be implemented by using software, hardware, firmware, or any combination thereof. When the software is used to implement the embodiments, the part or all of the embodiments may be implemented in a form of a computer program product. The computer program product includes one or more computer programs or instructions. When the computer programs or the instructions are loaded and executed on a computer, a part or all of procedures or functions in embodiments of this application are executed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, such as a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD).

## Claims

1. A computer system power supply method, wherein the method is executed by a power management module in a computer system, and the method comprises:
obtaining (S320) a parameter that affects a power supply capability and that is of a power supply unit in the computer system;
determining (S330) the power supply capability of the power supply unit based on the parameter, wherein the power supply capability indicates a capability of providing a burst power for a component in the computer system; and
controlling (S340), based on the power supply capability, the power supply unit to supply power to the component in the computer system,
wherein the burst power indicates an instantaneous power that meets a power supply requirement of the component in the computer system,
wherein the parameter comprises a rated power, an output voltage, an output current, and a temperature; before the determining the power supply capability of the power supply unit based on the parameter, the method further comprises:
obtaining (S331) the power supply requirement of the component; and
the determining (S330) the power supply capability of the power supply unit based on the parameter comprises:
determining (S332) a remaining supply power of the power supply unit based on the rated power, the output voltage, the output current, and the temperature; and
determining (S333) the burst power of the power supply unit and power supply duration of the burst power based on the remaining supply power and the power supply requirement of the component.

2. The method according to claim 1, wherein the parameter comprises a rated power, an output voltage, an output current, and a temperature, and the determining the power supply capability of the power supply unit based on the parameter comprises:
controlling, according to a preset rule, the power supply unit to supply power to an overclocked component, wherein the preset rule indicates a manner of alternately supplying power to the component at the rated power and the burst power.

3. The method according to any one of claims 1 to 2, wherein the controlling (S340), based on the power supply capability, the power supply unit to supply power to the component in the computer system comprises:
controlling the power supply unit to adjust a bus voltage based on the power supply requirement to store electric energy; and
supplying power to the component based on the burst power when the component is overclocked.

4. The method according to any one of claims 1 or 2, wherein the method further comprises:
controlling to adjust a fan speed of the power supply unit; and
supplying power to the component based on the burst power when the component is overclocked.

5. The method according to any one of claims 1 to 2, wherein the method further comprises:
controlling to adjust a loop bandwidth of the power supply unit based on a PID algorithm, and supplying power to the component based on the burst power when the component is overclocked.

6. A computer system power supply apparatus (1000), wherein the apparatus (1000) comprises:
a monitoring module (1020), configured to obtain a parameter that affects a power supply capability and that is of a power supply unit in a computer system;
a decision module (1030), configured to determine the power supply capability of the power supply unit based on the parameter, wherein the power supply capability indicates a capability of providing a burst power for a component in the computer system; and
a power supply module (1040), configured to control, based on the power supply capability, the power supply unit to supply power to the component in the computer system,
wherein the burst power indicates an instantaneous power that meets a power supply requirement of the component in the computer system,
wherein the parameter comprises a rated power, an output voltage, an output current, and a temperature, the apparatus further comprises a communication module, wherein
the communication module (1010) is configured to obtain the power supply requirement of the component; and
when determining the power supply capability of the power supply unit based on the parameter, the decision module is specifically configured to:
determine a remaining supply power of the power supply unit based on the rated power, the output voltage, the output current, and the temperature; and
determine the burst power of the power supply unit and power supply duration of the burst power based on the remaining supply power and the power supply requirement of the component.

7. The apparatus (1000) according to claim 6, wherein the parameter comprises a rated power, an output voltage, an output current, and a temperature, and when determining the power supply capability of the power supply unit based on the parameter, the decision module is specifically configured to:
control, according to a preset rule, the power supply unit to supply power to an overclocked component, wherein the preset rule indicates a manner of alternately supplying power to the component at the rated power and the burst power.

8. The apparatus (1000) according to any one of claims 6 or 7, wherein when controlling, based on the power supply capability, the power supply unit to supply power to the component in the computer system, the power supply module (1040) is specifically configured to:
control the power supply unit to adjust a bus voltage based on the power supply requirement to store electric energy; and
supply power to the component based on the burst power when the component is overclocked.

9. The apparatus (1000) according to any one of claims 6 to 8, wherein the power supply module (1040) is further configured to:
control to adjust a fan speed of the power supply unit; and
supply power to the component based on the burst power when the component is overclocked.

10. The apparatus (1000) according to any one of claims 6 to 9, wherein the power supply module (1040) is further configured to:
control to adjust a loop bandwidth of the power supply unit based on a PID algorithm, and supply power to the component based on the burst power when the component is overclocked.

11. A computer system, wherein the computer system comprises a power management module and a component, and the power management module is configured to perform operation steps of the method according to any one of claims 1 to 5 to supply power to the component.

## Patentansprüche

1. Stromversorgungsverfahren für Computersysteme, wobei das Verfahren durch ein Stromverwaltungsmodul in einem Computersystem ausgeführt wird und das Verfahren Folgendes umfasst:
Erlangen (S320) eines Parameters, der eine Stromversorgungsfähigkeit beeinflusst und der zu einer Stromversorgungseinheit in dem Computersystem gehört;
Bestimmen (S330) der Stromversorgungsfähigkeit der Stromversorgungseinheit basierend auf dem Parameter, wobei die Stromversorgungsfähigkeit eine Fähigkeit zum Bereitstellen eines Burst-Stroms für eine Komponente in dem Computersystem angibt; und
Steuern (S340), basierend auf der Stromversorgungsfähigkeit, der Stromversorgungseinheit, um die Komponente in dem Computersystem mit Strom zu versorgen,
wobei der Burst-Strom einen unmittelbaren Strom angibt, der eine Stromversorgungsanforderung der Komponente in dem Computersystem erfüllt,
wobei der Parameter einen Nennstrom, eine Ausgangsspannung, eine Ausgangsstromstärke und eine Temperatur umfasst; und das Verfahren vor dem Bestimmen der Stromversorgungsfähigkeit der Stromversorgungseinheit basierend auf dem Parameter ferner Folgendes umfasst:
Erlangen (S331) der Stromversorgungsanforderung der Komponente; und
das Bestimmen (S330) der Stromversorgungsfähigkeit der Stromversorgungseinheit basierend auf dem Parameter Folgendes umfasst:
Bestimmen (S332) eines verbleibenden Versorgungsstroms der Stromversorgungseinheit basierend auf dem Nennstrom, der Ausgangsspannung, der Ausgangsstromstärke und der Temperatur; und
Bestimmen (S333) des Burst-Stroms der Stromversorgungseinheit und der Stromversorgungsdauer des Burst-Stroms basierend auf dem verbleibenden Versorgungsstrom und der Stromversorgungsanforderung der Komponente.

2. Verfahren nach Anspruch 1, wobei der Parameter einen Nennstrom, eine Ausgangsspannung, eine Ausgangsstromstärke und eine Temperatur umfasst und das Bestimmen der Stromversorgungsfähigkeit der Stromversorgungseinheit basierend auf dem Parameter Folgendes umfasst:
Steuern, gemäß einer voreingestellten Regel, der Stromversorgungseinheit, um eine übertaktete Komponente mit Strom zu versorgen, wobei die voreingestellte Regel eine Art und Weise angibt, die Komponente abwechselnd mit dem Nennstrom und dem Burst-Strom mit Strom zu versorgen.

3. Verfahren nach einem der Ansprüche 1 oder 2, wobei das Steuern (S340), basierend auf der Stromversorgungsfähigkeit, der Stromversorgungseinheit, um die Komponente in dem Computersystem mit Strom zu versorgen, Folgendes umfasst:
Steuern der Stromversorgungseinheit, um eine Busspannung basierend auf der Stromversorgungsanforderung anzupassen, um elektrische Energie zu speichern; und
Versorgen der Komponente mit Strom basierend auf dem Burst-Strom, wenn die Komponente übertaktet ist.

4. Verfahren nach einem der Ansprüche 1 oder 2, wobei das Verfahren ferner Folgendes umfasst:
Steuern, um eine Lüfterdrehzahl der Stromversorgungseinheit anzupassen; und
Versorgen der Komponente mit Strom basierend auf dem Burst-Strom, wenn die Komponente übertaktet ist.

5. Verfahren nach einem der Ansprüche 1 bis 2, wobei das Verfahren ferner Folgendes umfasst:
Steuern, um eine Schleifenbandbreite der Stromversorgungseinheit basierend auf einem PID-Algorithmus anzupassen, und Versorgen der Komponente mit Strom basierend auf dem Burst-Strom, wenn die Komponente übertaktet ist.

6. Stromversorgungsvorrichtung (1000) für Computersysteme, wobei die Vorrichtung (1000) Folgendes umfasst:
ein Überwachungsmodul (1020), das dazu konfiguriert ist, einen Parameter zu erlangen, der eine Stromversorgungsfähigkeit beeinflusst und der zu einer Stromversorgungseinheit in einem Computersystem gehört;
ein Entscheidungsmodul (1030), das dazu konfiguriert ist, die Stromversorgungsfähigkeit der Stromversorgungseinheit basierend auf dem Parameter zu bestimmen, wobei die Stromversorgungsfähigkeit eine Fähigkeit zum Bereitstellen eines Burst-Stroms für eine Komponente in dem Computersystem angibt; und
ein Stromversorgungsmodul (1040), das dazu konfiguriert ist, die Stromversorgungseinheit basierend auf der Stromversorgungsfähigkeit zu steuern, um die Komponente in dem Computersystem mit Strom zu versorgen,
wobei der Burst-Strom einen unmittelbaren Strom angibt, der eine Stromversorgungsanforderung der Komponente in dem Computersystem erfüllt,
wobei der Parameter einen Nennstrom, eine Ausgangsspannung, eine Ausgangsstromstärke und eine Temperatur umfasst und die Vorrichtung ferner ein Kommunikationsmodul umfasst, wobei
das Kommunikationsmodul (1010) dazu konfiguriert ist, die Stromversorgungsanforderung der Komponente zu erlangen; und,
wenn die Stromversorgungsfähigkeit der Stromversorgungseinheit basierend auf dem Parameter bestimmt wird, das Entscheidungsmodul spezifisch zu Folgendem konfiguriert ist:
Bestimmen eines verbleibenden Versorgungsstroms der Stromversorgungseinheit basierend auf dem Nennstrom, der Ausgangsspannung, der Ausgangsstromstärke und der Temperatur; und
Bestimmen des Burst-Stroms der Stromversorgungseinheit und der Stromversorgungsdauer des Burst-Stroms basierend auf dem verbleibenden Versorgungsstrom und der Stromversorgungsanforderung der Komponente.

7. Vorrichtung (1000) nach Anspruch 6, wobei der Parameter einen Nennstrom, eine Ausgangsspannung, eine Ausgangsstromstärke und eine Temperatur umfasst und, wenn die Stromversorgungsfähigkeit der Stromversorgungseinheit basierend auf dem Parameter bestimmt wird, das Entscheidungsmodul spezifisch zu Folgendem konfiguriert ist:
Steuern, gemäß einer voreingestellten Regel, der Stromversorgungseinheit, um eine übertaktete Komponente mit Strom zu versorgen, wobei die voreingestellte Regel eine Art und Weise angibt, die Komponente abwechselnd mit dem Nennstrom und dem Burst-Strom mit Strom zu versorgen.

8. Vorrichtung (1000) nach einem der Ansprüche 6 oder 7, wobei, wenn die Stromversorgungseinheit basierend auf der Stromversorgungsfähigkeit gesteuert wird, um die Komponente in dem Computersystem mit Strom zu versorgen, das Stromversorgungsmodul (1040) spezifisch zu Folgendem konfiguriert ist:
Steuern der Stromversorgungseinheit, um eine Busspannung basierend auf der Stromversorgungsanforderung anzupassen, um elektrische Energie zu speichern; und
Versorgen der Komponente mit Strom basierend auf dem Burst-Strom, wenn die Komponente übertaktet ist.

9. Vorrichtung (1000) nach einem der Ansprüche 6 bis 8, wobei das Stromversorgungsmodul (1040) ferner zu Folgendem konfiguriert ist:
Steuern, um eine Lüfterdrehzahl der Stromversorgungseinheit anzupassen; und
Versorgen der Komponente mit Strom basierend auf dem Burst-Strom, wenn die Komponente übertaktet ist.

10. Vorrichtung (1000) nach einem der Ansprüche 6 bis 9, wobei das Stromversorgungsmodul (1040) ferner zu Folgendem konfiguriert ist:
Steuern, um eine Schleifenbandbreite der Stromversorgungseinheit basierend auf einem PID-Algorithmus anzupassen, und Versorgen der Komponente mit Strom basierend auf dem Burst-Strom, wenn die Komponente übertaktet ist.

11. Computersystem, wobei das Computersystem ein Stromverwaltungsmodul und eine Komponente umfasst und das Stromverwaltungsmodul dazu konfiguriert ist, Betriebsschritte des Verfahrens nach einem der Ansprüche 1 bis 5 durchzuführen, um die Komponente mit Strom zu versorgen.

## Revendications

1. Procédé d'alimentation électrique d'un système informatique, dans lequel le procédé est exécuté par un module de gestion de l'alimentation dans un système informatique, et le procédé comprend :
l'obtention (S320) d'un paramètre qui affecte une capacité d'alimentation et qui est d'une unité d'alimentation dans le système informatique ;
la détermination (S330) de la capacité d'alimentation de l'unité d'alimentation basée sur le paramètre, dans lequel la capacité d'alimentation indique une capacité à fournir une puissance de pointe à un composant du système informatique ; et
la commande (S340), basée sur la capacité d'alimentation, de l'unité d'alimentation fournit l'alimentation au composant du système informatique,
dans lequel la puissance de pointe indique une puissance instantanée qui répond aux besoins d'alimentation du composant du système informatique,
dans lequel le paramètre comprend une puissance nominale, une tension de sortie, un courant de sortie et une température ;
avant de déterminer la capacité d'alimentation de l'unité d'alimentation basée sur le paramètre, le procédé comprend en outre :
l'obtention (S331) du besoin en alimentation du composant ; et
la détermination (S330) de la capacité d'alimentation de l'unité d'alimentation basée sur le paramètre comprend :
la détermination (S332) d'une puissance d'alimentation restante de l'unité d'alimentation basée sur la puissance nominale, de la tension de sortie, du courant de sortie et de la température ; et
la détermination (S333) de la puissance de pointe de l'unité d'alimentation et la durée d'alimentation de la puissance de pointe basée sur la puissance d'alimentation restante et du besoin en alimentation du composant.

2. Procédé selon la revendication 1, dans lequel le paramètre comprend une puissance nominale, une tension de sortie, un courant de sortie et une température, et la détermination de la capacité d'alimentation de l'unité d'alimentation basée sur le paramètre comprend :
la commande, selon une règle prédéfinie, de l'unité d'alimentation pour alimenter un composant overclocké, dans lequel la règle prédéfinie indique une manière d'alimenter alternativement le composant à la puissance nominale et à la puissance de pointe.

3. Procédé selon l'une quelconque des revendications 1 et 2, dans lequel la commande (S340), basée sur la capacité d'alimentation, de l'unité d'alimentation destinée à alimenter le composant du système informatique comprend :
la commande de l'unité d'alimentation pour ajuster la tension du bus basée sur les besoins en alimentation afin de stocker l'énergie électrique ; et
l'alimentation du composant basée sur la puissance de pointe lorsque le composant est overclocké.

4. Procédé selon l'une quelconque des revendications 1 et 2, dans lequel le procédé comprend en outre :
la commande permettant de régler la vitesse du ventilateur du bloc d'alimentation ; et
l'alimentation du composant basée sur la puissance de pointe lorsque le composant est overclocké.

5. Procédé selon l'une quelconque des revendications 1 et 2, dans lequel le procédé comprend en outre :
la commande permettant d'ajuster la bande passante de la boucle du bloc d'alimentation basée sur un algorithme PID, et la fourniture d'alimentation au composant basée sur la puissance de pointe lorsque le composant est overclocké.

6. Appareil d'alimentation électrique pour système informatique (1000), dans lequel l'appareil (1000) comprend :
un module de surveillance (1020), configuré pour obtenir un paramètre qui affecte une capacité d'alimentation et qui est d'une unité d'alimentation dans un système informatique ;
un module de décision (1030), configuré pour déterminer la capacité d'alimentation de l'unité d'alimentation basée sur le paramètre, dans lequel la capacité d'alimentation indique une capacité à fournir une puissance de pointe à un composant du système informatique ; et
un module d'alimentation (1040), configuré pour commander, basé sur la capacité d'alimentation, l'unité d'alimentation afin de fournir une alimentation au composant du système informatique,
dans lequel la puissance de pointe indique une puissance instantanée qui répond aux besoins d'alimentation du composant du système informatique,
dans lequel le paramètre comprend une puissance nominale, une tension de sortie, un courant de sortie et une température, l'appareil comprend en outre un module de communication, dans lequel
le module de communication (1010) est configuré pour obtenir l'alimentation requise par le composant ; et
lors de la détermination de la capacité d'alimentation de l'unité d'alimentation basée sur le paramètre, le module de décision est spécifiquement configuré pour :
la détermination d'une puissance d'alimentation restante de l'unité d'alimentation basée sur la puissance nominale, de la tension de sortie, du courant de sortie et de la température ; et
la détermination de la puissance de pointe de l'unité d'alimentation et la durée d'alimentation de la puissance de pointe basées sur la puissance d'alimentation restante et du besoin en alimentation du composant.

7. Appareil (1000) selon la revendication 6, dans lequel le paramètre comprend une puissance nominale, une tension de sortie, un courant de sortie et une température, et, lors de la détermination de la capacité d'alimentation de l'unité d'alimentation basée sur le paramètre, le module de décision est spécifiquement configuré pour :
la commande, selon une règle prédéfinie, de l'unité d'alimentation pour alimenter un composant overclocké, dans lequel la règle prédéfinie indique une manière d'alimenter alternativement le composant à la puissance nominale et à la puissance de pointe.

8. Appareil (1000) selon l'une quelconque des revendications 6 et 7, dans lequel, lors de la commande, sur la base de la capacité d'alimentation, de l'unité d'alimentation pour alimenter le composant du système informatique, le module d'alimentation (1040) est spécifiquement configuré pour :
la commande de l'unité d'alimentation pour ajuster la tension du bus basée sur le besoin en alimentation afin de stocker l'énergie électrique ; et
l'alimentation d'un composant basé sur la puissance de pointe lorsque le composant est overclocké.

9. Appareil (1000), selon l'une quelconque des revendications 6 à 8, dans lequel le module d'alimentation (1040) est en outre configuré pour :
la commande permettant de régler la vitesse du ventilateur de l'unité d'alimentation ; et
l'alimentation d'un composant basé sur la puissance de pointe lorsque le composant est overclocké.

10. Appareil (1000) selon l'une quelconque des revendications 6 à 9, dans lequel le module d'alimentation (1040) est en outre configuré pour :
la commande permettant d'ajuster la bande passante de la boucle de l'unité d'alimentation basée sur un algorithme PID, et la fourniture d'alimentation au composant basée sur la puissance de pointe lorsque le composant est overclocké.

11. Système informatique, dans lequel le système informatique comprend un module de gestion de l'alimentation et un composant, et le module de gestion de l'alimentation est configuré pour effectuer les étapes de fonctionnement du procédé selon l'une quelconque des revendications 1 à 5 afin de fournir de l'énergie au composant.
